# EUROPÄISCHE PATENTANMELDUNG

(11) **EP 3 067 874 A1**
(43) Veröffentlichungstag der Anmeldung: **14.09.2016**
(21) Anmeldenummer: 16159482.5
(22) Anmeldetag: 09.03.2016
(51) Int. Cl.: G09B 9/16, G09B 9/12, G09B 9/30

(54) **VERFAHREN UND VORRICHTUNG ZUM TESTEN EINES IN EINEM LUFTFAHRZEUG ZU BEDIENENDEN GERÄTS**

(30) Priorität: 13.03.2015 DE 102015103735
(71) Anmelder: Airbus Defence and Space GmbH, 82024 Taufkirchen (DE)
(72) Erfinder: Dreyer, Daniel, 85411 Hohenkammer (DE); Oberhauser, Matthias, 81379 München (DE)
(74) Vertreter: Kastel, Stefan

(57) **Zusammenfassung**

Um insbesondere Mensch-Maschine-Schnittstellen (74) in einem möglichst frühen Stadium kostengünstig unter möglichst reellen Bedingungen testen zu können, schafft die Erfindung ein Verfahren zum Testen wenigstens eines in Luftfahrzeugen zu bedienenden Geräts (56) mittels einer Virtual-Reality-Umgebung, wobei das wenigstens eine zu testende Gerät (56) einer Testperson (20) virtuell dargestellt wird, und eine Interaktion zwischen der Testperson (20) und dem wenigstens einen Gerät (56) mittels oder in der Virtual-Reality-Umgebung aufgenommen wird.

## Beschreibung

Die Erfindung betrifft ein Verfahren zum Testen wenigstens eines in Luftfahrzeugen zu bedienenden Geräts. Weiter betrifft die Erfindung eine Gerätetestvorrichtung, mit der ein derartiges Testverfahren durchführbar ist.

Hochmoderne Luftfahrzeuge, wie Flugzeuge oder Hubschrauber, weisen immer mehr Funktionen und komplexere Systeme auf. Dennoch sollen sie möglichst einfach von Piloten beherrschbar sein. Es gilt daher, Cockpits, Schaltstände und sonstige Mensch-Maschine-Schnittstellen zur Bedienung von Luftfahrzeugen derart weiter zu entwickeln, dass die Bedienung auch sehr komplexer Fluggeräte einfacher und weniger belastend für die Crewmitglieder wird. Umso mehr können sich die Crewmitglieder bei Situationen, die das menschliche Eingreifen erfordern, auf die dann erforderlichen Aufgaben konzentrieren.

Zur Beherrschbarkeit von Luftgeräten mit sehr unterschiedlichen technischen Systemen sind bereits moderne Cockpits entwickelt worden, welche Funktionen zusammenfassen und mehr intuitiv bedienen lassen. Analoge Anzeigen werden immer mehr durch Anzeigen ersetzt, welche sich auf einem Bildschirm der jeweiligen Situation angepasst darstellen lassen. Es gibt das Bedürfnis, unterschiedliche Funktionen über Fingersteuerung oder Gestensteuerung, beispielsweise an Tablet-PC-artigen Bediengeräten oder an Touchscreens, zu bedienen. Die Entwickler sind stets bemüht, hierzu optimale Benutzeroberflächen zu entwickeln, die das Bedienen für die Piloten nicht erschweren, sondern erleichtern.

Es gibt das Bedürfnis, neue Bedienkonzepte, die beispielsweise über neue Benutzeroberflächen, neu entwickelte Touchscreens oder neu entwickelte Tablet-PCs oder graphische Benutzer-Interfaces realisiert werden, möglichst realistisch und möglichst ausführlich zu testen.

Der Erfindung liegt die Aufgabe zugrunde, ein Verfahren und eine Vorrichtung zu schaffen, mit der in einem Luftfahrzeug zu bedienende Geräte einfach und kostengünstig und dennoch realistisch bereits in einer Frühphase der Entwicklung auf ihre Eignung zum Betrieb in Luftfahrzeugen getestet werden können.

Diese Aufgabe wird durch ein Verfahren gemäß Anspruch 1 sowie einer Vorrichtung gemäß dem Nebenanspruch gelöst.

Vorteilhafte Ausgestaltungen sind Gegenstand der Unteransprüche.

Gemäß einem ersten Aspekt schafft die Erfindung ein Verfahren zum Testen wenigstens eines in Luftfahrzeugen zu bedienenden Geräts mittels einer Virtual-Reality-Umgebung, wobei das wenigstens eine zu testende Gerät einer Testperson virtuell dargestellt wird, und eine Interaktion zwischen der Testperson und dem wenigstens einen Gerät mittels der Virtual-Reality-Umgebung aufgenommen wird.

Es ist bevorzugt, dass zumindest die Testperson mittels einer Bewegungsplattform entsprechend einer in der Virtual-Reality-Umgebung zu simulierenden Betriebssituation des Luftfahrzeugs bewegt wird.

Es ist bevorzugt, dass das Gerät durch ein Platzhalterobjekt zum Darstellen eines haptischen Feedbacks simuliert wird.

Es ist bevorzugt, dass das Platzhalterobjekt und die Testperson auf der Bewegungsplattform bewegt werden.

Es ist bevorzugt, dass durch eine Plattenfläche an dem Platzhalterobjekt ein Touchscreen oder ein Tablet-PC mit einer zu testenden Bedienfunktion haptisch simuliert werden oder dass ein Touchscreen oder ein Tablet-PC mit einer zu testenden Bedienfunktion an einer Halterung zur Bedienung durch die Testperson angebracht werden.

Es ist bevorzugt, dass mit dem Verfahren eine von einem Mitglied einer Cockpitbesatzung zu bedienende Benutzerschnittstelle zur Steuerung einer Funktion des Luftfahrzeugs getestet wird.

Es ist bevorzugt, dass mit dem Verfahren ein neu zu entwickelndes Cockpitbediengerät getestet wird.

Es ist bevorzugt, dass mit dem Verfahren ein Tablet-PC oder Touchscreen mit einer zu testenden Bedieneroberfläche getestet wird.

Es ist bevorzugt, dass mit dem Verfahren eine Benutzerschnittstelle mit Gesten- oder Fingersteuerung und einer zu testenden über die Gesten- oder Fingersteuerung zu bedienenden Funktionseinrichtung getestet wird.

Es ist bevorzugt, dass mit dem Verfahren ein mit einer Anzeigeeinrichtung für eine Bedienperson ausgestattetes Gerät getestet wird.

Es ist bevorzugt, dass mit dem Verfahren eine von einem Mitglied der Kabinencrew zu bedienendes Gerät getestet wird.

Es ist bevorzugt, dass mit dem Verfahren ein von einem Passagier zu benutzendes und/oder zu bedienendes Gerät und/oder eine von einem Passagier zu benutzende Kabineneinrichtung getestet wird.

Es ist bevorzugt, dass ein mit einer Anzeigeeinrichtung ausgestattetes Gerät getestet wird und dass die Anzeigeeinrichtung und/oder auf der Anzeigeeinrichtung anzuzeigende Darstellungen der Testperson virtuell dargestellt werden.

Es ist bevorzugt, dass ein Platzhalterobjekt zur Lieferung eines haptischen Feedbacks vorgesehen wird, das ohne Anzeigeeinrichtung ausgestattet ist. Alternativ wird eine Halterung für das Gerät und/oder dessen Anzeigeeinrichtung vorgesehen.

Gemäß einem weiteren Aspekt schafft die Erfindung eine Gerätetestvorrichtung zum Testen von in Luftfahrzeugen zu bedienenden Geräten, mit
einem Virtual-Reality-System zur Erzeugung einer Virtual-Reality-Umgebung und einer Testpersonenstation, in der sich eine Testperson zum Testen des Geräts aufhalten kann, so dass die Testperson in die Virtual-Reality-Umgebung eingebunden ist,
wobei das Virtual-Reality-System dazu ausgebildet ist, der Testperson das zu testende Gerät virtuell darzustellen, und
wobei das Virtual-Reality-System dazu ausgebildet ist, Interaktionen zwischen der Testperson und dem zu testenden Gerät aufzunehmen.

Es ist bevorzugt, dass die Testpersonenstation auf einer Bewegungsplattform ausgebildet ist und dass das Virtual-Reality-System dazu ausgebildet ist, die Bewegungsplattform entsprechend einer mittels der Virtual-Reality-Umgebung zu simulierenden Betriebssituation des Luftfahrzeuges zu bewegen.

Es ist bevorzugt, dass ein Platzhalterobjekt für das virtuell darzustellende Gerät vorgesehen ist, um der Testperson ein haptisches Feedback beim Testen zu geben. Alternativ ist eine Halterung für das zu testende Gerät vorgesehen, um der Testperson ein haptisches und/oder funktionelles Feedback gleich am Gerät zu geben. Letztere Möglichkeit ist insbesondere für das Testen eines Touchscreens oder einer Benutzerschnittstelle mit Finger- oder Gestensteuerung und neuer zu testender Benutzeroberflächen oder neuer zu testender Funktionalitäten interessant.

Es ist bevorzugt, dass das Platzhalterobjekt auf der Bewegungsplattform angeordnet ist.

Es ist bevorzugt, dass das Platzhalterobjekt eine Platte zum haptischen Simulieren eines zu testenden Tablet-PCs oder Touchscreens aufweist.

Es ist bevorzugt, dass das Virtual-Reality-System dazu ausgebildet ist, eine Anzeigeeinrichtung eines zu testenden Geräts der Testperson virtuell darzustellen.

Gemäß einer besonders bevorzugten Ausführungsform des Verfahrens und der Vorrichtung wird eine Virtual-Reality-Flugsimulation mit einer Bewegungsplattform geschaffen.

Dadurch lassen sich neu zu entwickelnde Geräte relativ kostengünstig realistisch testen. Insbesondere lässt sich so ein Bewegungs-Feedback, ein Kraft-Feedback und/oder ein Schwingungs-Feedback in Virtual-Reality-Umgebungen schaffen, so dass zu testende Geräte, die virtuell in der Virtual-Reality-Umgebung dargestellt werden können, hinsichtlich ihrer Bedienbarkeit unter unterschiedlichen Flugsituationen oder anderen Betriebssituationen des Luftfahrtgerätes getestet werden können. Dadurch wird eine möglichst realistische Flugerfahrung in einer Virtual-Reality-Umgebung erzeugt.

Gemäß einer Idee wird bei einem Verfahren und einer Vorrichtung zum Durchführen von Forschungs- und Entwicklungsarbeiten in Bezug auf neue Geräte und Konzepte für die Luftfahrt mittels Virtual-Reality-Systemen eine Bewegung hinzugefügt.

Besondere Ausgestaltungen betreffen Konzepte für bewegungsbasierte Kabinenbenutzerstudien und Flugdeck- bzw. Cockpitbenutzerstudien in einer Virtual-Reality-Umgebung.

Der Entwicklungsprozess von Flugdecks und Cockpits erfordert das Einbinden von Benutzern und die Erforschung der Brauchbarkeit von Mensch-Maschine-Schnittstellen in einem frühen Entwicklungsstadium, um Fehlentwicklungen möglichst zu vermeiden. So können Änderungen, die auf einem Feedback von Benutzerstudien basieren, früh in das Produkt integriert werden, und zusätzliche Kosten können vermieden werden. Zum Durchführen solcher Benutzerstudien ist ein Prototyp mit hohem Simulationsgrad vorteilhaft. Es wäre natürlich möglich, das jeweilige Produkt als Prototyp möglichst realitätsnah zu formen und anschließend durch eine Testperson als Benutzer testen zu lassen. Derartige rein durch Hardware realisierte Prototypen sind jedoch teuer und recht unflexibel. Im Gegensatz dazu wird gemäß hier dargestellten Ausführungsbeispielen der Erfindung vorgeschlagen, einen kostengünstigen Virtual-Reality-Flugsimulator und/oder ein kostengünstiges Virtual-Reality-System zum Durchführen derartiger Experimente zu verwenden.

Bei bisher untersuchten Virtual-Reality-Systemen sind jedoch Abstriche bezüglich der Testbarkeit unter Realbedingungen zu machen, die auf den Funktionalitäten bisheriger Virtual-Reality-Systeme und der dadurch erzeugbaren Virtual-Reality-Umgebung basieren.

Eine dieser Begrenzungen ist das Fehlen von Kräften, die im realen Flugbetrieb auftreten. Demgemäß wird bei einer bevorzugten Ausgestaltung der Erfindung ein Virutal-Reality-Flugsimulator vorgestellt, der durch ein brauchbares und kostengünstiges Bewegungssystem erweitert wird. Obgleich Flugsimulatoren gut bekannt sind und auch kleinskalierte Bewegungsplattformen gut bekannt sind, sind diese bisher noch nicht zum realen Testen von Bediengeräten während deren Entwicklung in Virtual-Reality-Umgebungen eingesetzt worden.

Eine solche Kombination kann nicht nur zum Durchführen von Benutzerstudien an neuen Flugdeck-Konzepten und insbesondere neuen Bedienkonzepten für Cockpits von Luftfahrtgeräten eingesetzt werden, sondern kann auch für eine Forschung mit Bezug auf den Passagierkomfort in der Kabine verwendet werden.

Im Folgenden wird die Erfindung anhand der beigefügten Zeichnungen näher erläutert. Dabei zeigen:
- Fig. 1: eine schematische Blockdarstellung eines Virtual-Reality-Systems zur Verwendung in einem Testverfahren zum Testen von Geräten für Luftfahrzeuge bzw. zur Verwendung in einer Gerätetestvorrichtung zum Testen von Luftfahrzeugen;
- Fig. 2: eine perspektivische schematische Darstellung einer Ausführungsform der Gerätetestvorrichtung unter Verwendung des Virtual-Reality-Systems von Fig. 1;
- Fig. 3: eine weitere Ausführungsform der Gerätetestvorrichtung;

- Fig. 4: eine schematische Seitenansicht auf die Gerätetestvorrichtung und deren praktischen Einsatz in einem Testverfahren;
- Fig. 5: eine perspektivische Darstellung eines Beispiels eines zu testenden Gerätes, welches mit der Gerätetestvorrichtung gemäß einer der Fig. 2 bis 3 zu testen ist, während einer Flugsituation, in der Turbulenzen auftreten und die durch die Gerätetestvorrichtung simuliert wird;
- Fig. 6: eine aus der Situation von Fig. 5 hervorgegangene verbesserte Bediensituation des zu testenden Geräts während des Testens mittels der Virtual-Reality-Umgebung, die durch das Virtual-Reality-System von Fig. 1 erzeugt wird;
- Fig. 7: eine seitliche Darstellung der Gerätetestvorrichtung beim Testen des in Fig. 5 und Fig. 6 gezeigten zu testenden Geräts; und
- Fig. 8: die Gerätetestvorrichtung beim Test einer für den Passagier in der Kabine des Luftfahrgeräts gedachten Kabineneinrichtung.

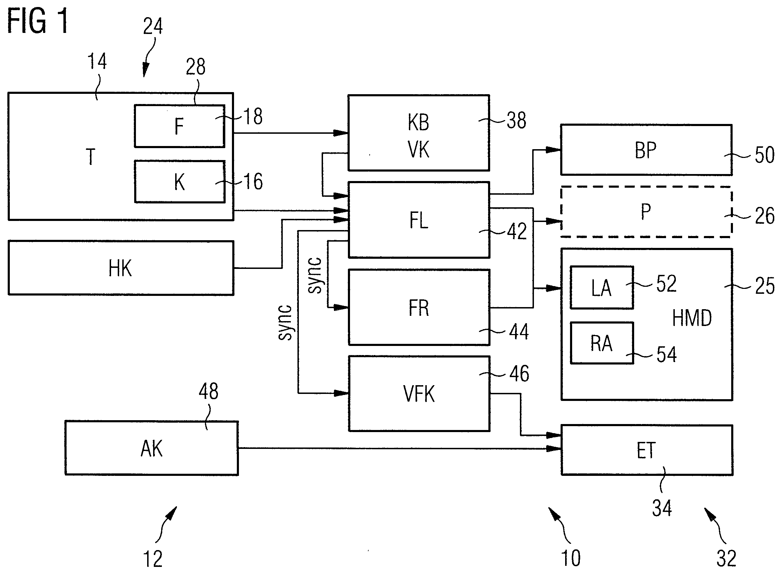

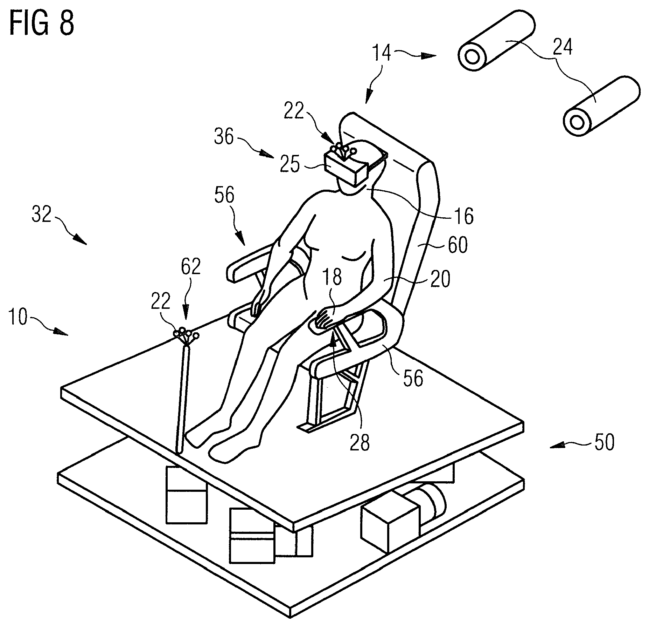

Im Folgenden werden mit Bezug auf die Fig. 1 bis 8 Ausführungsbeispiele eines Verfahrens zum Testen von an Bord von Luftfahrzeugen zu bedienenden Geräten 56 sowie einer Gerätetestvorrichtung 32 zum Durchführen eines solchen Testverfahrens näher erläutert.

Das Verfahren und die Vorrichtung 32 eignen sich insbesondere dazu, neue Bedienkonzepte für Cockpits von Luftfahrzeugen, wie Flugzeugen oder Hubschraubern, besonders früh in ihrer Entwicklung zu testen, um in einer frühen Entwicklungsstufe mit möglichst geringem Kostenaufwand und Testaufwand die Machbarkeit und insbesondere die Handhabbarkeit der Geräte 56 durch Bedienpersonal zu testen. Insbesondere soll damit in einem frühen Stadium der Faktor Mensch und die Möglichkeiten der Mensch-Maschine-Kommunikation - Stichwort "Human Factor" - getestet werden, ohne aufwändigere Simulationen oder Flugversuche zum Testen des Grundkonzepts durchführen zu müssen.

Bei dem Verfahren und der Vorrichtung wird ein Virtual-Reality-System 10 zur Darstellung einer Virtual-Reality-Umgebung verwendet. Zum Aufbau des Virtual-Reality-Systems 10 wird z.B. auf Flugsimulationen aus dem Consumer-Bereich zurückgegriffen.

Die Durchführung von Human-Factors-Experimenten unter Einsatz von Flugsimulationen aus dem Consumer-Bereich ist aufgrund einer enormen Realitätsnähe eine forschungseffiziente Alternative zum kompletten physischen Mock-up. Diese Realitätsnähe entsteht aufgrund einer detailgetreuen optischen Gestaltung der Flugzeuge oder sonstigen Luftfahrzeuge und deren guter Flugeigenschaften.

Gemäß einer Ausführungsform werden dem Original nachempfundene Cockpits virtuell dargestellt. Diese dem Original nachempfundenen Cockpits bieten gute Voraussetzungen für die Durchführung von Human-Factors-Experimenten, sowohl im Bereich der Grundlagenforschung als auch der angewandten Forschung. Es ist möglich, die Flugsimulationen modular zu erweitern. Software-Module ermöglichen die Integration von psychologischen Messinstrumenten in die Simulation und die Gestaltung standardisierter Versuchsabläufe. Darüber hinaus können die Flugsimulationen aus dem Consumer-Bereich nicht nur zweidimensional, sondern auch dreidimensional dargestellt werden. Eine Ergänzung der Flugsimulation mit Hardwarekomponenten 40, wie zum Beispiel Sticks, Schubhebel und Ruderpedale, kann den Grad der Realitätsnähe erhöhen. Neue Cockpitsysteme oder gar komplette Cockpitkonzepte können in die Flugsimulation integriert und mit Probandenstudie evaluiert werden.

Einige Flugsimulationen, die im Consumer-Bereich angeboten werden, wie z. B. Microsoft Flight Simulator, FlightGear oder X-Plane, bieten als Versuchsumgebung ein ausreichendes Ausmaß an ökologischer Validität.

Einige dieser kostengünstigen oder gar kostenlosen Flugsimulationen bieten Vorrausetzungen, die den wissenschaftlichen Ansprüchen der Grundlagenforschung und auch der angewandten Forschung im Bereich Human Factors genügen. Diese Voraussetzungen sind Flugzeugmuster mit realitätsnahen flugdynamischen Eigenschaften, eine gute graphische Darstellung des Cockpits, eine vollständige und originalgetreue Funktionalität und Bedienbarkeit möglichst aller Flugzeugsysteme sowie die Möglichkeit zur Umgestaltung oder Erweiterung bestehender Flugzeugmuster mit innovativen Cockpitsystemen und kompletten Cockpitkonzepten, um diese zu evaluieren.

Die hohe Qualität der Flugsimulationen ruft im Allgemeinen eine hohe Akzeptanz bei lizensierten Piloten hervor und erhöht somit deren Bereitschaft, an Human-Factors-Experimenten teilzunehmen. Diese Tatsache erleichtert die Organisation von Experimenten, da es sich bei Piloten um eine eher kleine Population handelt.

Aus Sicht der Human-Factors-Forschung sticht eine Eigenschaft hervor: Die oben beschriebenen Flugsimulationen bieten die Möglichkeit, unter Einsatz von ergänzenden Modulen eine Versuchsumgebung zu gestalten, die den Anforderungen des jeweiligen Experimentes genügt. So ermöglichen es Module, ein bestimmtes psychologisches Messinstrument zu nutzen, eine bestimmte Forschungsfrage zu bearbeiten oder ein ausreichendes Ausmaß an ökologischer Validität - d.h. eines vernünftigen Verhältnisses von Kosten und Testaufwand zum Ausmaß der Realitätsnähe - zu erzielen. Module gibt es sowohl im Bereich der Software als auch der Hardware. Software-Module können z. B. der Implementierung neuer Flugsysteme oder innovativer Cockpitkonzepte, der Einbettung von psychologischen Messinstrumenten oder der Gestaltung von standardisierten Flugaufgaben dienen. Hardwarekomponenten 40, z.B. in Form von Bedienelementen, erhöhen die Realitätsnähe im Bereich der Haptik. Tracking-Systeme 14, 28, 34 verknüpfen die Körperbewegungen der Testpersonen 20 mit dem Bildausschnitt und verbessern so die räumliche Wahrnehmung des Cockpits. Zudem liefern sie Informationen über die Bewegungen und Blickrichtungen der Testpersonen 20 im Cockpit.

Als Ausgang für das Virtual-Reality-System 10 kann man von Flugsimulationen ausgehen, die für den Consumer-Bereich entwickelt wurden. Diese sind aufgrund ihrer einfachen Bedienung und ihrer großen Variationsmöglichkeiten bezüglich der Flugbedingungen (Wetter, Tageszeit, atmosphärische Störungen usw.), der Flugsituation (Höhe, Fluglage, usw.) und der Cockpitkonfiguration (simulierte Flugzeugsysteme, Blickfeld des Piloten, Bedienelemente, usw.) geeignet für ein breites Anwenderfeld. Ein hohes Maß an Praktikabilität, die einfache Menüstruktur und außerdem die niedrigen Anschaffungskosten erleichtern den Einstieg in die Nutzung einer solchen Flugsimulation zu Forschungszwecken.

Im Folgenden wird die modulare Erweiterbarkeit von Flugsimulationen aus dem Consumer-Bereich durch Software und Hardware erörtert. Es werden Möglichkeiten zur Integration psychologischer Methoden, ein Plug-in zur Gestaltung standardisierter Versuchsabläufe und verschiedene Möglichkeiten zur Visualisierung beschrieben.

Das Virtual-Reality-System 10 weist insbesondere wenigstens eine Datenverarbeitungseinheit (nicht dargestellt) auf, die zum Durchführen einer Flugsimulation ausgerüstet ist, eine oder mehrere Aufnahmegeräte 24, die die Testperson 20 oder Teile der Testperson 20 - insbesondere Hände, Finger 18 oder Gliedmaßen oder Gliedmaßen, die zum Bedienen des zu testenden Geräts 56 herangezogen werden sollen, aufnehmen, sowie eine Testpersonaufnahmestation 58 auf, wo sich die Testperson 20 während des Tests aufhalten kann. Die Testpersonaufnahmestation 58 kann z.B einen Sitz 60 für ein Crewmitglied - z.B. Pilotensitz - oder einen Standplatz für die Testperson 20 aufweisen, je nach Bediensituation des zu testenden Geräts 56.

Als Datenverarbeitungseinheit ist zum Beispiel ein Computer vorgesehen, auf dem eine Flugsimulationssoftware - z.B. aufbauend auf einem Flugsimulator aus dem Consumerbereich - läuft.

Eine Grundfunktion eines jeden Flugsimulators ist das Erzeugen einer Außensicht. Hierzu werden das Gelände, Objekte und Wettererscheinungen mehr oder weniger realistisch dreidimensional dargestellt. Für die Flugführung kann zusätzlich zur dreidimensionalen Außensicht ein Cockpit mit Instrumenten dargestellt werden.

Der einfachste Fall zur Darstellung eines Cockpits in einem Flugsimulator ist die Lagerung von zweidimensionalen Instrumenten über die Außensicht des Piloten. Diese Art der Darstellung stellt die Instrumente (dynamische Rundinstrumente oder Displays) in den Vordergrund. Die Cockpitgeometrie selbst kann nur durch eine zweidimensionale Grafik angedeutet werden. Meist sind in dieser Darstellung aus Platzgründen nur die für den Flug wichtigsten Instrumente, oft nur in vereinfachter Form, vorhanden. Weitere Instrumente bzw. Außenansichten können auf separaten Monitoren dargestellt werden, um dieses Platzproblem zu umgehen.

Alle aktuellen Flugsimulatoren bieten darüber hinaus die Möglichkeit, 3D-Geometrie für die Visualisierung des Cockpits zu verwenden. Diese sogenannten virtuellen Cockpits bestehen, wie im Bereich der Computerspiele üblich, aus sogenannten Mesh-Polygonen, einem Gitternetz aufgebaut aus Dreiecken. Viele handelsübliche Computer-Aided-Design-Programme (CAD) können von Haus aus ein solches Gittermodell exportieren. Dadurch kann ein in einem CAD-Programm erstelltes Cockpit mit relativ geringem Aufwand in einen Flugsimulator übertragen werden. Zusätzlich kann diese Cockpitgeometrie mit Texturen versehen werden.

Der Realismus der Darstellung reicht hierbei von einer vereinfachten, nicht texturierten Cockpitgeometrie bis hin zu einem detailgetreuen Design mit bereits vorschattierten Texturen oder realen Fotos. Für viele kommerzielle Flugzeugtypen sind bereits fertig ausgearbeitete virtuelle Cockpits erhältlich. Die Kameraposition kann beliebig verändert werden, und somit können während des Fluges je nach Bedarf verschiedene Bereiche des Cockpits betrachtet und verwendet werden.

Zudem ist es durch die Verbreitung moderner leistungsstarker Grafikkarten möglich, dynamische Schatten innerhalb des Cockpits zu erzeugen, was den realistischen Eindruck während der Simulation/des Fluges zusätzlich erhöht.

Die beschriebenen virtuellen Cockpits bieten aber meist mehr als nur eine reine dreidimensionale Darstellung. Vielmehr können dynamische Texturen und animierte Objekte eingebunden werden. Sowohl die dynamischen Texturen als auch die Animationen können hierbei mit Echtzeit-Systemparametern verknüpft werden.

Somit können Displays oder dynamische Rundinstrumente eingebunden werden. Durch die Animation von 3D-Objekten lassen sich zudem Hebel oder Schalter dynamisch bewegen. Neben dieser einfachen Anwendung ist es durch Animationen auch möglich, ganze Instrumente während der Simulation zu- oder abzuschalten oder die Position von Elementen im Cockpit während der Simulation zu verändern.

Diese Cockpits, die in gewissen Maßen auch dynamisch veränderbar sind, bieten einen enormen Vorteil gegenüber echten physikalischen Cockpitaufbauten. Bei diesen ist der Aufwand für Auf- und Umbau um ein Vielfaches größer als bei rein virtuellen Cockpits. So können bei letzteren Elemente des Cockpits oder die ganze Umgebung ohne großen Aufwand verändert werden. Vergleichende Evaluationen zwischen zwei Cockpitkonzepten oder Teilen davon können ohne langwierige Umbaumaßnahmen durchgeführt werden. Testpersonen 20 können innerhalb kurzer Zeit verschiedene Cockpits testen. Gerade bei der Arbeit mit Piloten als Testpersonen 20 ist dies ein großer Vorteil, da die Verfügbarkeit von kommerziellen Piloten schwer kalkulierbar ist. Es ist schwer, den gleichen Piloten für einen Folgetest im Abstand von ein paar Tagen noch einmal zu befragen, da er sich wahrscheinlich wieder auf der anderen Seite der Erde aufhält. Eine Bündelung von Versuchen mit unterschiedlichen experimentellen Variationen an einem einzigen Tag mit Hilfe eines virtuellen Cockpits ist also von großem Nutzen, wenn ein Pilot mehrere Cockpit-Konzepte bewerten soll und tagesformabhängige Effekte minimiert werden sollen.

Bei einer Ausführungsform der hier in Rede stehenden Gerätetestvorrichtung und des damit durchführbaren Testverfahrens kann zusätzlich zu einer Flugaufgabe und/oder Instrumenten auch noch die Cockpitgeometrie bzw. die räumliche Anordnung von Elementen für eine Untersuchung von Bedeutung sein, daher ist es von Vorteil, wenn die entsprechende die Cockpitstruktur räumlich dargestellt wird. Gemäß einer Idee wird für ein neues zu testendes Gerät 56 ein Platzhalterobjekt 30 vorgesehen, um ein haptisches Feedback zu erzeugen. Dies wird hiernach noch näher erläutert.

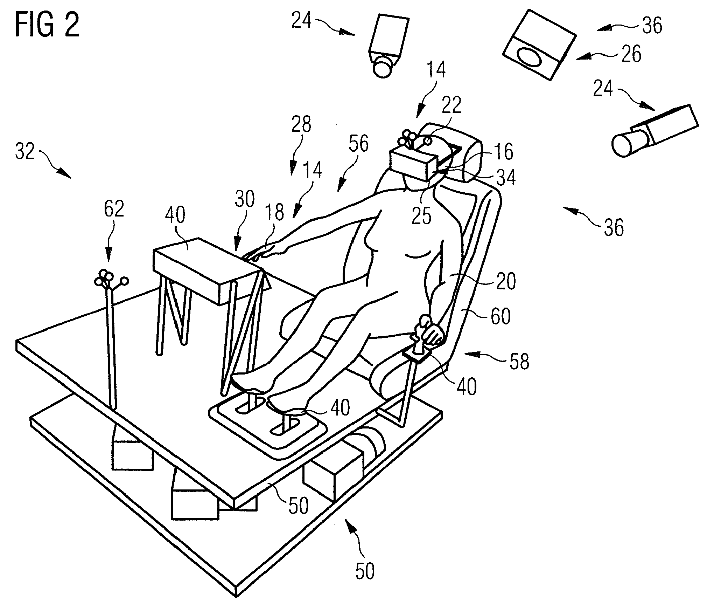

Um aufwändige Umbauten eines physikalischen Mock-ups oder gar eines Full-Flight-Simulators zu umgehen, wird für das Virtual-Reality-System 10 ein Virtual Reality Flight Simulator (VRFS) - Simulator 12 - vorgesehen, dessen schematischer Aufbau als Blockdarstellung in Fig. 1 dargestellt ist. Einige Ausführungsbeispiele des Hardware-Aufbaus sind in den Fig. 2, 3 und 4 dargestellt.

Den Kern des Simulators 12 bildet ein optisches Tracking-System 14, welches Position und Orientierung des Kopfes 16 und der Finger 18 auf Zehntelmillimeter genau bestimmen kann. Z.B. sind an dem Kopf 16 und den Fingern 18 der Testperson 20 jeweils mehrere Messsonden 22 angebracht, die durch ein Aufnahmesystem mit mehreren Aufnahmegeräten 24 - insbesondere ein Kamerasystem mit mehreren Kameras - ortsauflösend erfassbar sind.

Die Informationen dieses Head-Trackings werden mit der Kameraposition im 3D-Cockpit der Simulation synchronisiert.

Um einen dreidimensionalen Tiefeneindruck des virtuellen Cockpits und der Umgebung zu erhalten, werden zwei synchronisierte Instanzen des Flugsimulators 42, 44 verwendet oder eine einzige Instanz mit zwei Perspektiven (split screen). Einziger Unterschied zwischen diesen beiden Videobildern ist eine leichte laterale Verschiebung und Verdrehung der Kameraposition. Anschließend werden diese beiden Videobilder an ein Ausgabegerät 36 gesendet.

Als Ausgabegerät 36 kann ein Head-Mounted-Display (HMD) 25 verwendet werden. Dieses weist z.B. einen Helm auf, dessen Position vom Tracking-System 14 erfasst wird, mit zwei Displays - 52, 54 -, die sich jeweils direkt vor einem Auge der Testperson 20 befinden. Diese Displays bieten der Testperson 20 keine Sicht auf den Raum, in dem er sich befindet.

Das HMD 25 bietet den Vorteil, dass sich die Testperson 20 uneingeschränkt in alle Richtungen drehen und immer noch direkt auf die beiden Displays 52, 54 blicken kann. Somit kann das komplette virtuelle Cockpit betrachtet und ein höherer Grad der Immersion, also des Ausmaßes des Eintauchens in die virtuelle Welt, erreicht werden. Durch die in den beiden Flugsimulator-Instanzen 42, 44 erzeugten Videobilder und ihre Übertragung auf den jeweiligen Bildschirm kann zudem Stereoskopie, also ein Tiefeneindruck, erreicht werden.

Alternativ können die Videosignale auch über einen Projektor 26 an eine entsprechend große Leinwand projiziert werden, wodurch das Sichtfeld der Testperson 20 komplett ausgenutzt wird. Durch einen 3D-Projektor in Verbindung mit einer 3D-Brille, deren Position ebenfalls per Tracking-System 14 erfasst wird, kann ein stereoskopischer Eindruck erzielt werden. Moderne Projektorsysteme können kaskadiert werden. Das heißt, es können mehrere Projektoren 26 kombiniert werden, um die Projektionsfläche zu erweitern. Dadurch wird eine nahezu unbegrenzte Auflösung ermöglicht. Außerdem ist durch eine genaue Kalibrierung eine winkel- und größengetreue Darstellung möglich. Durch eine Krümmung der Leinwand kann ein recht großes Sichtfeld abgedeckt werden.

Um auch eine Interaktion mit dem virtuellen Cockpit und insbesondere einem darin anzuordnenden zu testenden Geräts 56 aufzuzeichnen, kann ein Finger-Tracking-System 28 vorgesehen sein. Hierbei werden die Position und die Orientierung der Hand und der einzelnen Finger 18 erfasst.

In einem Ausführungsbeispiel trägt die Testperson 20 hierfür einen speziellen Handschuh oder Elemente, die auf die Finger 18 aufgesteckt werden, um Messsonden 22 bereit zu stellen. Die Daten, also die Position und die Orientierung der Finger 18 und der Hand, werden an den Simulator 12 gesendet. Anhand dieser Daten wird eine vereinfachte Handgeometrie erzeugt, so dass die Testperson 20 ein virtuelles Abbild seiner Hand in der Flugsimulation sieht.

Im vollvirtuellen Fall können Schalter oder Tasten des Cockpits durch eine Kollisionsberechnung - Kollisionsberechnungseinheit 38 - der Fingergeometrie und der Tastengeometrie bedient werden. Da die Testperson 20 hierbei kein haptisches Feedback erhält, kann ein einfacher Widerstand (z.B. durch Platten) oder ein nicht funktionales physikalisches Mock-up - ein Platzhalterobjekt 30 - an der exakt selben räumlichen Position bereitgestellt werden. Somit lässt sich mit geringem Aufwand ein einfacher haptischer Eindruck vermitteln.

Ein vollvirtuelles Cockpit bietet maximale Flexibilität, da Änderungen rein softwareseitig durchgeführt werden können. Allerdings hat ein vollvirtuelles Cockpit Nachteile in der Bedienbarkeit, da hier haptisches Feedback völlig fehlt. Je mehr Hardware in das System eingefügt wird, desto besser wird die Bedienbarkeit durch die zusätzliche Haptik. Allerdings muss dieser Vorteil mit höheren Kosten und einer geringeren Flexibilität erkauft werden. So lassen sich Änderungen im System nicht mehr rein softwareseitig durchführen. Vielmehr müssen Hardwarekomponenten 40 verschoben oder komplett neu gestaltet werden. Es empfiehlt sich daher, besonders für Drehschalter oder Elemente, die ständig Verwendung finden, Hardwarekomponenten 40 zu verwenden.

Bei einem Ausführungsbeispiel der Virtual-Reality-Umgebung 10 werden deshalb für den Joystick, den Schubhebel-Quadranten und die Ruderpedale, also die wichtigsten Eingabegeräte für die Flugführung, handelsübliche USB-Geräte verwendet. Zusätzlich kann beispielsweise die Flight Control Unit (FCU), die für die Bedienung des Autopiloten verwendet wird, durch ein funktionales Mock-up simuliert werden. Dies garantiert ein hohes Maß an Flexibilität mit dem benötigten Grad an Bedienbarkeit. Wird die Virtual Reality mit mehr echter Hardware angereichert, schwindet dieser Vorteil und auch die Kosten nähern sich denen eines vollständigen Mock-ups.

Ein Aspekt beim Testen von neuen Geräten ist eine Erfassung visueller Aufmerksamkeit beim Bedienen des Geräts. Bei einer Ausführungsform einer Gerätetestvorrichtung 32, die das Virtual-Reality-System 10 zum Testen neu zu entwickelnder Geräte 56 einsetzt, stehen dafür zwei Möglichkeiten zur Verfügung. Zum einen ein in das Head-Mounted-Display 25 integriertes Eye-Tracking-System 34 und eine software-basierte Lösung - eine softwarebasierte Aufmerksamkeitserfassung. Beide werden im Folgenden vorgestellt.

Der Virtual-Reality-Flight-Simulator 12 kann mit dem Eye-Tracking-System 32 erweitert werden. Dazu wird in das Ausgabegerät HMD 25 eine Augenkamera 48 eingebaut. Dieses geschieht z.B. über ein modulares Stecksystem und einen Zahnring, wie dies genauer in der EP 2 821 839 A1 beschrieben und gezeigt ist.. Mit diesen kann das Eye-Tracking als Bestandteil eines Head-Mounted-Displays 25 an die Physiologie der jeweiligen Testperson 20 angepasst werden. Des Weiteren wird eine virtuelle Feldkamera 46 eingesetzt. Das Bild der virtuellen Feldkamera 46 und das Bild der Augenkamera 48 werden übereinandergelegt und so der Blickpfad erfasst. In einer synchronisierten Instanz können noch weitere für das Eye-Tracking relevante Informationen oder Informationen zur Versuchsauswertung eingeblendet werden, ohne dass diese für die Testperson 20 sichtbar sind. Die Daten des Eye-Trackings können manuell, semi-automatisch oder vollautomatisch in der Versuchsnachbearbeitung ausgewertet werden.

Im Gegensatz zum Eye-Tracking handelt es sich bei der softwarebasierten Aufmerksamkeitserfassung um eine Methode zur Erfassung der visuellen Aufmerksamkeit, die als Plug-in in die Simulation integriert ist. Dabei wird der Testperson 20 eine Hauptaufgabe und eine zweite Aufgabe abverlangt, um der Verteilung der visuellen Aufmerksamkeit zu erfassen.

Bei der Hauptaufgabe handelt es sich z.B. um das Führen eines Luftfahrzeugs. Ein als Testperson 20 wirkender Pilot beobachtet die Anzeigen und bedient die Eingabegeräte der Flugsimulation in gewohnter Art und Weise. Die zusätzliche Aufgabe ist z.B. eine Detektionsaufgabe. Im Cockpitfenster oder an Orten im Cockpit, bei denen überprüft werden soll, ob ihnen ausreichend visuelle Aufmerksamkeit geschenkt wird, werden Targets eingeblendet. Diese Targets sind z.B. kleine Quadrate und werden räumlich und zeitlich randomisiert eingeblendet. Die Aufgabe der Testperson besteht darin, so schnell wie möglich bei Erkennen eines Targets eine Taste zu drücken. Im Cockpit bietet sich eine Taste am Joystick oder am Steuerhorn an. Die Verteilung der visuellen Aufmerksamkeit wird operationalisiert anhand der Detektionsrate der Targets in den unterschiedlichen Bereichen des Cockpits. Wird in einem bestimmten Bereich häufiger auf Targets reagiert als anderen Bereichen, wird diesem Bereich auch mehr visuelle Aufmerksamkeit geschenkt.

Die zuvor erwähnten Techniken können zum Testen der Bedienbarkeit und der Brauchbarkeit neuer Geräte 56 eingesetzt werden.

Im Folgenden wird der Einsatz der Gerätetestvorrichtung 32 zum Testen von Geräten 56 zum Einsatz in Cockpits oder sonstigen Flugdecks näher erläutert.

Fig. 1 zeigt hierzu den Virtual-Reality-Flugsimulator 12. Ein getestetes Ausführungsbeispiel des Virtual-Reality-Flugsimulators 12 erweitert eine kommerziell erhältliche Flugsimulationssoftware durch Virtual-Reality-Fähigkeiten. Demnach können zu der Software durch entsprechende CAD-Programme erstellte virtuelle Objekte eingefügt werden und so virtuell dargestellt werden, um sie einer Testperson 20 in der Virtual-Reality-Umgebung darzustellen.

Eine grundsätzliche Ausführungsform des Virtual-Reality-Systems 10 weist das Tracking-System 14, ein Ausgabegerät 36 und die Möglichkeit einer Interaktion mit der Flugsimulation und dem digital simulierten Gerät 56 auf. Hierzu wird mittels eines Aufnahmegeräts 24 eine Interaktion zwischen der Testperson 20 und dem zu testenden Gerät 56 aufgenommen.

Das Tracking-System 14 erfasst die Messsonden 22 am Kopf 16 und den Fingern 18 der Testperson 20 und bindet diese in die Virtual-Reality-Umgebung der Flugsimulation ein.

In einer Kollisionsberechnungseinheit 38 lassen sich virtuelle Kontrollen und zu bedienende Geräte rein virtuell darstellen.

Weiter sind z.B. ein Steuerstick, ein Schubhebel, eine Flugkontrolleinheit (FCU) und sonstige für das Cockpit stets übliche Geräte über Hardwarekomponenten 40 darzustellen, um für diese üblichen im Cockpit vorhandenen Steuereinrichtungen ein haptisches Feedback für die Testperson 20 zu liefern.

Wie oben bereits erwähnt, gibt es einen ersten Flugsimulator 42 für das linke Auge und einen zweiten Flugsimulator 44 für das rechte Auge, die miteinander so synchronisiert sind, dass eine dreidimensionale Darstellung erreichbar ist, oder es wird eine Instanz mit Split Screen verwendet. Weiter wird eine virtuelle Feldkamera 46 vorgesehen, mittels der das Umgebungsfeld an die Blicksituation anpassbar ist. Eine Augenkamera 48 erfasst die Augen der Testperson 20 und gibt die entsprechenden Informationen in das Eye-Tracking-System 34 ein.

Weiter ist eine Bewegungsplattform 50 vorgesehen, die mittels der Daten aus den Flugsimulatoren 12, 42, 44 entsprechend der zu testenden Flugsituation bewegt wird.

Als Ausgabegerät 36 kann der Projektor 26 und/oder das Head-Mounted-Display 25 dienen, welches an das linke Auge und das rechte Auge unterschiedliche Darstellungen 52, 54 liefert.

Der Aufbau mit den Hardwarekomponenten 40, der Bewegungsplattform 50, der Testperson 20, eines zu testenden Geräts 56 und einer Testpersonenaufnahmestation 58 auf der Bewegungsplattform 50, die z.B. einen Sitz 60 für die Testperson 20 aufweist, sind in unterschiedlichen Ausgestaltungen in den Fig. 2 bis 4 dargestellt.

Das optische Tracking-System 14 liefert eine Information über sechs Freiheitsgrade für den Kopf 16 der Testperson 20 und der Position ihrer rechten Hand und jeden deren Finger 18. Diese Daten werden dann in das lokale Koordinatensystem des Simulators 12 übertragen. Zur Erfassung des lokalen Koordinatensystems ist auf der Bewegungsplattform 50 eine Referenz-Messsondeneinheit 62 mit Messsonden 22 vorgesehen, die als Referenzpunkt für das lokale Koordinatensystem dienen.

Die transformierten Hand-Tracking-Daten erzeugen in der Virtual-Reality-Umgebung eine Geometrie, die eine menschliche Hand simuliert. Die transformierten Kopf-Tracking-Daten sind mit der virtuellen (Feld-)Kamera 46 in dem dreidimensionalen Cockpit in der Flugsimulation verbunden, um eine realistische Umgebung für das entsprechende Sichtfeld der Testperson 20 zu erzeugen. Um eine stereoskopische Sicht zu erzeugen, werden die Kopf-Tracking-Daten zu den beiden synchronisierten Flugsimulations-Instanzen 42, 44 des Simulators 12 gesendet, wobei für jedes Auge eine entsprechende optische Transformation erfolgt.

Die durch die Simulation oder im Falle der stereoskopischen Ansicht der beiden synchronisierten Simulationen erzeugten Videodaten können der Testperson 20 über das Head-Mounted-Display 25 angezeigt werden. Beispiele für geeignete HMD 25 sind die auf dem Markt unter dem Handelsnamen NVIS SX 60 und "Sensics dSight" erhältlichen Displays. Beispielsweise hat das HMD 25 eine Auflösung von 1280 x 1024 Pixeln pro Auge mit einem diagonalen Gesichtsfeld ("field-of-view - FOV) von 60 Grad. Ein anderes geeignetes HMD 25 bietet 1920 x 1080 Pixeln pro Auge und ein Panorama-Gesichtsfeld von 131 Grad. Prinzipiell ist jedoch jedes HMD geeignet, dass eine genügend hohe Auflösung besitzt.

Es sind unterschiedliche Methoden entworfen worden und in den Simulator 12 eingebunden worden, um der Testperson 20 eine Kontrolle und Steuerung über die Simulation an die Hand zu geben und mit Cockpitelementen zu interagieren. Es ist auch untersucht worden, die Interaktion voll virtuell darzustellen. Hierbei wird das zu testende Gerät 56 voll virtuell dargestellt und ist in der Realität nicht vorhanden. Ein Kollisionsdetektionssystem - die Kollisions-Berechnungseinheit 38 - wird in diesem Falle eingesetzt, um ein entsprechendes Bedienen der Testperson 20, beispielsweise mittels der Finger 18, durch eine Kollision der virtuell erzeugten Finger mit dem virtuellen Gerät zu erfassen. Wenn eine Kollision zwischen einer virtuellen Knopfgeometrie oder der Geometrie einer anderen Bedieneinheit und einer virtuellen Fingergeometrie erfasst wird, wird ein Befehlssignal an die Simulation gesendet. In einem solchen Fall einer voll virtuellen Kontrolle hat die Testperson 20 kein haptisches Feedback, was die Verwendbarkeit derartiger Kontrollelemente schwierig macht. Mit Mechanismen zum Verhindern einer Mehrfachaktivierung (Entprellfilter) und durch Anpassen der Größe der Kollisionsvolumen kann eine Interaktion mit voll virtuellen Elementen verbessert werden.

Bereits durch Anordnung von einfachen Sperrholzplatten oder Acrylglasplatten oder dergleichen Platten an der räumlichen Position von virtuellen Knöpfen oder sonstigen Bediengeräten kann ein einfaches haptisches Feedback erzeugt werden.

Mit dieser Methode des Einsetzens von Platzhalterobjekten 30 für zu testende Geräte kann die Verwendbarkeit von virtuellen Elementen weiter verbessert werden. Auch können aktive Hardwareelemente mit der Simulation verbunden werden. Wenn diese Elemente in der exakt gleichen räumlichen Position wie in dem digitalen Simulationsaufbau platziert werden, wird ein sogenanntes "Mixed Mock-up" erzeugt. Häufig verwendete Hebel und Drehknöpfe sollten für eine schnelle und intuitive Benutzung als Hardwarekomponenten 40 vorgesehen werden. Ob man tatsächlich benutzbare Hardwaregeräte zu dem digitalen Simulationsaufbau hinzufügt oder nicht, ist je nach Kosten-Nutzen-Aufwand und je nach gewünschter Flexibilität zu entscheiden.

Bei einer besonders bevorzugten Ausgestaltung der Gerätetestvorrichtung 32 wird mittels der Bewegungsplattform 50 ein verbesserter Simulationsgrad für eine realistischere Simulation von reellen Flugbedingungen erreicht. G-Belastungen und Kräfte sind ein wesentlicher Bestandteil des Fliegens eines Luftfahrzeuges, da sie eine Anzeige und manchmal die wesentlichste und bestimmende Anzeige des Verhaltens des Luftfahrzeuges sind. Auf die Bewegungsplattform 50 werden Informationen über die aktuellen Kräfte aus dem Flugmodell gegeben; die Bewegungsplattform 50 überführt diese Information in eine entsprechende Bewegung der Plattform. Die Bewegungsplattform 50 kann nicht nur Kräfte simulieren, sondern auch Vibrationen, welche aufgrund von Turbulenzen oder bei einem Rollen auf einem Flugfeld erzeugt werden.

Es gibt bereits kleine Bewegungsplattformen 50 auf dem Markt, die für kleinskalierte Anwendungen, wie Endverbraucher, Flugsimulatoren oder Rennsimulatoren, ausgerüstet sind. Diese Bewegungsplattformen 50 werden z.B. durch mehrfache elektrische Aktuatoren bewegt. Derartige Bewegungsplattformen 50 werden durch die von dem Simulator 12 zur Verfügung gestellten Simulationsdaten angetrieben und bieten Bewegungen in sechs Freiheitsgraden. Insbesondere kann die Bewegungsplattform 50 sich entlang von drei Achsen bewegen und auch um diese Achsen drehen. Eine kostengünstige und kompakte Bewegungsplattform 50 mit sechs Freiheitsgraden ist beispielsweise unter dem Handelsnamen "CKAS 6DOF small scale motion-Platform" erhältlich.

In bevorzugten Ausgestaltungen werden Bewegungsplattformen 50 verwendet, die eine Fläche von kleiner als 3 m x 3 m einnehmen, vorzugsweise kleiner als 2 m x 2 m einnehmen, und ein Gewicht von weniger als 1000 kg, vorzugsweise weniger als 500 kg, aufweisen.

Die Information über die Position der Bewegungsplattform 50 wird durch den Simulator 12 vorgegeben.

Die Fig. 2 bis 8 zeigen bevorzugte Verwendungsmöglichkeiten der Bewegungsplattform 50 in einer Gerätetestvorrichtung 32. Hierzu werden die Hardwarekomponenten 40, welche zur Simulation einer realistischen Testumgebung eingesetzt werden, sowie das zu testende Gerät 56 als auch der Sitz 60 auf der Bewegungsplattform 50 montiert. Weiter wird die Referenz-Messsondeneinheit 62 auf der Bewegungsplattform 50 montiert, um so das Koordinatensystem entsprechend mitzubewegen.

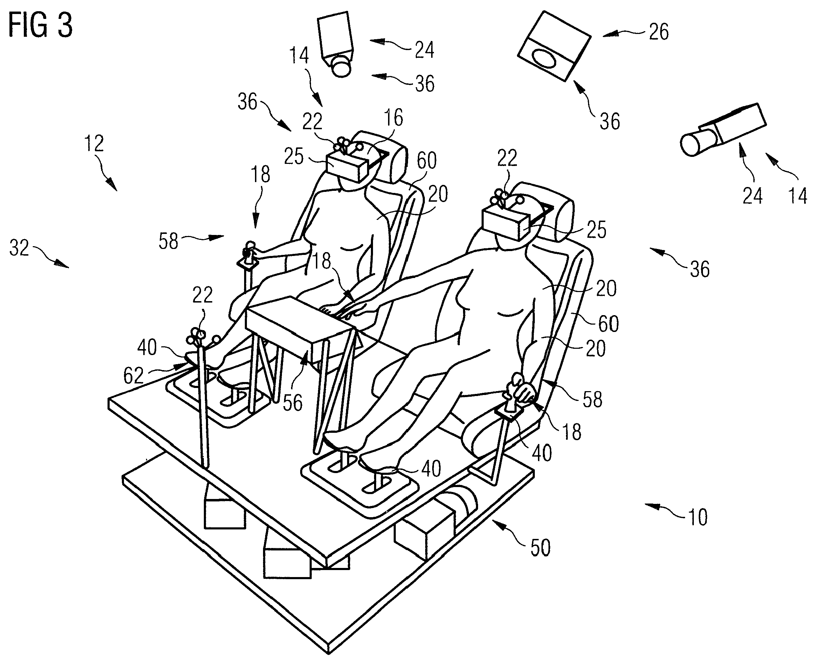

Wie in Fig. 3 gezeigt, kann abhängig von der Größe der Bewegungsplattform 50 auch eine weitere Testpersonenaufnahmestation 58 in Form eines weiteren Sitzes 60 für einen zweiten Piloten oder eine sonstige Testperson 20 hinzugefügt werden.

Das Tracking-System 14 zum Verfolgen der Position des Kopfes 16 und der Finger 18 sollte eine Verfolgung des Kopfes 16 und der Finger 18 relativ zu der Bewegungsplattform 50 aufzeichnen. Deswegen wird bei den dargestellten Ausführungsbeispielen, wo davon ausgegangen wird, dass Aufnahmegeräte 24, wie z.B. mehrere Kameras, feste Positionen in dem Testraum haben, das Referenzziel - Referenzmesssondeneinheit 62 - auf der Bewegungsplattform 50 montiert. Wenn das Tracking-System 14 - beispielsweise alle Aufnahmegeräte 24 oder Kameras - auf der Bewegungsplattform 50 befestigt ist, wäre ein solches Referenzziel nicht unbedingt notwendig. In dem Fall, dass zur Verfolgung des Kopfes 16 und der Finger 18 Beschleunigungssensoren eingesetzt werden, sollten die Kräfte, die durch die Bewegungsplattform 50 induziert werden, von den durch die Bewegung der Testperson 20 induzierten Kraft abgezogen werden.

Im Folgenden wird eine besonders bevorzugte Verwendung der Gerätetestvorrichtung 32 und ein Verfahren zum Testen eines Geräts für ein Luftfahrzeug beschrieben.

Bei dem Verfahren wird das Virtual-Reality-System 10 mit dem Simulator 12 zum Erzeugen einer Virtual-Reality-Umgebung verwendet. Dabei wird eine Geometrie bzw. eine Graphik des zu testenden Gerätes 56 in der Virtual-Reality-Umgebung der Testperson 20 angezeigt.

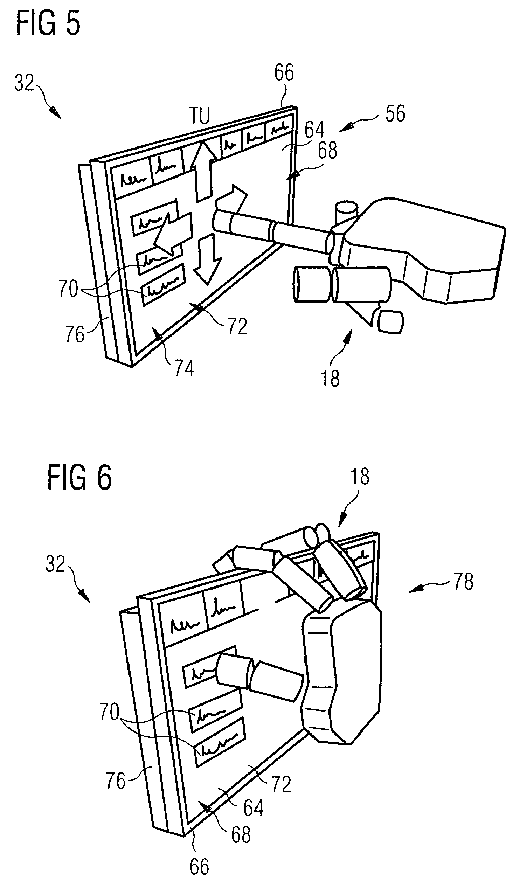

Wie in Fig. 5 ersichtlich, wird als zu testendes Gerät 56 beispielsweise ein Touchscreen 64 oder ein Tablet-PC 66 mit Finger- oder Gestensteuerung getestet.

Insbesondere wird auf der Anzeigeeinrichtung 68 des Tablet-PCs 66 - diese ist beispielsweise als der Touchscreen 64 ausgebildet - eine Benutzeroberfläche 72 mit graphisch dargestellten Schaltflächen 70 oder sonstigen Benutzerschnittstellen angezeigt und getestet, ob sich der Touchscreen 64, der Tablet-PC 66 und die Benutzerschnittstellen unter unterschiedlichen Flugsituation zur Bedienung eignen.

Insbesondere sollte bei dem Design von Mensch-Maschine-Schnittstellen 74 in Flugdecks die Brauchbarkeit auch bei hochturbulenten Umgebungen untersucht werden. Beispielsweise wird die Brauchbarkeit von Benutzeroberflächen 72, deren Schaltflächen 70, Anzeigeeinrichtungen 68 und/oder damit ausgestattete Tablet-PCs, beispielsweise mit Touchscreens 64, untersucht.

Hierzu wird insbesondere die Bewegungsplattform 50 eingesetzt, um entsprechende turbulente Bedingungen zu erzeugen und die Bedienbarkeit des zu testenden Geräts 56 und insbesondere dessen Mensch-Maschine-Schnittstellen 74 zu testen.

Hierzu ist insbesondere vorteilhaft, wenn die Testperson 20 ein haptisches Feedback erhält. Dies kann, wie oben bereits erläutert, durch ein Platzhalterobjekt 30 erreicht werden. Beispielsweise ist zum Simulieren des haptischen Feedbacks eines Touchscreens 64 oder eines Tablet-PCs 66 eine einfache Platte, beispielsweise aus Holzwerkstoffen oder Kunststoffen, im Bereich der Testpersonenaufnahmestation 58 angebracht.

Bei einer Ausgestaltung können Benutzeroberflächen 72 von Tablet-PCs 66 auf deren Anzeigeeinrichtung 68 durch das Virtual-Reality-System 10 rein virtuell erzeugt werden und der Testperson 20 über das Ausgabegerät 36 - z.B. HMD 25 oder Projektor 26 - virtuell angezeigt werden.

Weiter kann aber auch eine Halterung 76 vorgesehen sein, wo ein Tablet-PC 66 als zu testendes Gerät 56 real befestigbar ist. Der Tablet-PC 66 oder das sonstige zu bedienende Gerät 56 mit der zu testenden Mensch-Maschine-Schnittstelle 74 kann mit dem Virtual-Reality-System 10 verbunden werden, um zu testen, ob die korrekten Befehle durch die Testperson 20 eingegeben werden können.

Wie man dem Vergleich von Fig. 5 und 6 entnehmen kann, führte ein Testen eines Touchscreens 64 unter hochturbulenten Umgebungen zur Erkenntnis, dass ein bestimmter Griff 78 dem Piloten in solchen Situationen helfen kann. In Fig. 6 ist beispielsweise dargestellt, dass sich mehrere Finger 18 der Testperson 20 am oberen Rand des zu testenden Geräts 56 abstützen und eine Bedienung einer Schaltfläche 70 auch unter hochturbulenten Bedingungen mit dem Daumen erfolgen kann. Dies führt beispielsweise zu der Erkenntnis, dass bei der Einbindung von Touchscreens 64 Abstützmöglichkeiten für Finger des Piloten vorgesehen werden sollten, um die Bedienbarkeit von Touchscreens 64 zu verbessern.

Das Testen solcher Geräte 56 und insbesondere solcher Mensch-Maschine-Schnittstellen 74 in einem kostengünstigen Virtual-Reality-System 10 mit Bewegungsplattform 50 kann zur Weiterentwicklung derartiger Geräte 56, Systeme und Mensch-Maschine-Schnittstellen 74 führen. Dies gilt nicht nur für die Forschung an Touchscreens 64 - obgleich das Verfahren hierfür besonders bevorzugt und geeignet ist - sondern auch für jede andere Hardwarekomponente 40, die in das System integriert werden kann.

Wie oben bereits erwähnt, kann ein Touchscreen 64 zu der Virtual-Reality-Umgebung durch Anordnung des Geräts 56 an exakt der gleichen Position wie in der virtuellen Welt hinzugefügt werden. Dieser Touchscreen 64 kann sowohl ein funktionaler Touchscreen mit Möglichkeit der realen Bedienung sein, als auch ein nicht-funktionales Platzhalteobjekt 30 zum Erzeugen eines haptischen Feedbacks.

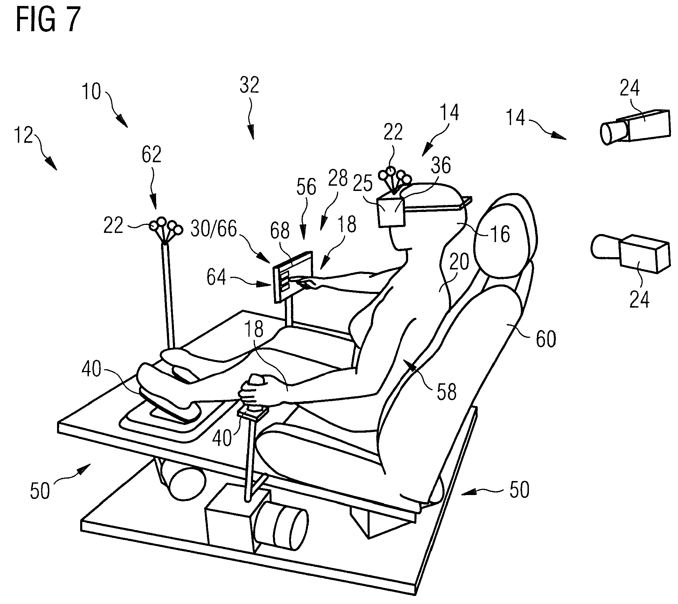

Die entsprechende Gesamtsituation ist in Fig. 7 dargestellt.

Das Hinzufügen einer Bewegungsplattform 50 zu einem Virtual-Reality-Flugsimulator 12 erhöht die Gesamtwiedergabetreue des Simulators 12 und damit die Qualität der Ergebnisse von Benutzerstudien, die mit diesem System 10 durchgeführt werden.

Aber nicht nur zum Testen von Geräten für Flugdecks ist das Testverfahren und die Gerätetestvorrichtung 32 geeignet. Das Virtual-Reality-System 10 kann auch zum Durchführen von Benutzerstudien bezüglich Sitzabstand, Kabineninnendesign und sogar für die Akzeptanz von fensterlosen Kabinen verwendet werden. Mit dem hier dargestellten Virtual-Reality-System 10 kann beispielsweise auch der Einfluss von Turbulenzen auf den Passagierkomfort mit einer einfach aufgebauten und kostengünstigen Testvorrichtung 32 getestet werden. Beispielsweise können hier Sitze, Sitzkonfigurationen, Bediengeräte zum Bedienen von Sitzen oder von Unterhaltungsmedien usw. getestet werden.

Ein weiterer möglicher Einsatz ist das Testen von Geräten für die Kabinencrew. Beispielsweise können Küchengeräte, Kommunikationsgeräte und sonstige von der Kabinencrew zu bedienende Geräte auf einem einfachen System unter recht realen Simulationsbedingungen in einem Frühstadium der Entwicklung getestet werden.

Der Aufbau zum Testen von Kabinenausrüstung als zu testendes Gerät 52 verlangt einen weniger großen Aufwand an das Virtual-Reality-System sowie eventuelle Platzhalteobjekte 30 als der Test von Cockpit-Geräten. Es muss daher nicht ein Virtual-Reality-Flugsimulator 12 eingesetzt werden, es reicht ein Virtual-Reality-System 10 ohne Flugsimulation aus. Beispielsweise sind ein einfacher Luftfahrzeugsitz 60 und ein Referenzziel mit einer Referenz-Messsondeneinheit 62 ausreichend. Da keine Außenumgebung als Flugsimulation mit derartigen Tests verbunden ist, kann einfach die Position der Bewegungsplattform 50 zur Aufnahme mittels der Aufnahmegeräte 24 erzeugt werden.

### Bezugszeichenliste:

- 10: Virtual-Reality-System
- 12: Simulator
- 14: Tracking-System
- 16: Kopf
- 18: Finger
- 20: Testperson
- 22: Messsonde
- 24: Aufnahmegerät
- 25: Head-Mounted-Display (HMD)
- 26: Projektor
- 28: Finger-Tracking-System
- 30: Platzhalterobjekt
- 32: Gerätetestvorrichtung
- 34: Eye-Tracking-System
- 36: Ausgabegerät
- 38: Kollisions-Berechnungseinheit
- 40: Hardwarekomponenten
- 42: erster Flugsimulator
- 44: zweiter Flugsimulator
- 46: virtuelle Feldkamera
- 48: Augenkamera
- 50: Bewegungsplattform
- 52: Darstellung linkes Auge
- 54: Darstellung rechtes Auge
- 56: zu testendes Gerät
- 58: Testpersonenaufnahmestation
- 60: Sitz
- 62: Referenz-Messsondeneinheit
- 64: Touchscreen
- 66: Tablet-PC
- 68: Anzeigeeinrichtung
- 70: Schaltfläche
- 72: Benutzeroberfläche
- 74: Mensch-Maschine-Schnittstelle
- 76: Halterung
- 78: Griff

### Beschriftung der Blöcke in Fig. 1:

- T: Tracking
- F: Finger
- K: Kopf
- HK: Hardwarekomponenten (Stick, Schubhebel, FCU, ...)
- KB: Kollisionsberechnung
- VK: virtuelle Kontrollen
- FL: Flugsimulator linkes Auge
- FR: Flugsimulator rechtes Auge
- sync: Synchronisation
- VFK: virtuelle Feldkamera
- AL: Augenkamera
- ET: Eye-Tracking
- BP: Bewegungsplattform
- P: 3D-Projektor
- HMD: Head-Mounted-Display
- LA: linkes Auge
- RA: rechtes Auge

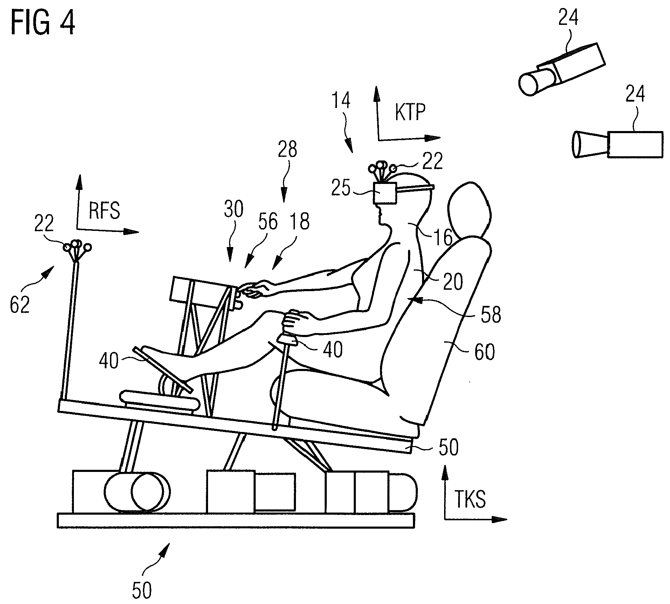

### Beschriftung Fig. 4:

- KTP: Kopf-Tracking-Position
- TKS: Tracking-Koordinaten-System
- RFS: Referenz-Koordinaten-System

### Beschriftung Fig. 5:

- TU: Turbulenzen

## Patentansprüche

1. Verfahren zum Testen wenigstens eines in Luftfahrzeugen zu bedienenden Geräts (56) mittels einer Virtual-Reality-Umgebung,
wobei das wenigstens eine zu testende Gerät (56) einer Testperson (20) virtuell dargestellt wird,
und eine Interaktion zwischen der Testperson (20) und dem wenigstens einen Gerät (56) mittels oder in der Virtual-Reality-Umgebung aufgenommen wird.

2. Verfahren nach Anspruch 1,
**dadurch gekennzeichnet,**
**dass** zumindest die Testperson (20) mittels einer Bewegungsplattform (50) entsprechend einer in der Virtual-Reality-Umgebung zu simulierenden Betriebssituation des Luftfahrzeugs bewegt wird.

3. Verfahren nach einem der voranstehenden Ansprüche,
**dadurch gekennzeichnet,**
**dass** das Gerät (56) durch ein Platzhalterobjekt (30) zum Darstellen eines haptischen Feedbacks simuliert wird.

4. Verfahren nach Anspruch 2 und 3,
**dadurch gekennzeichnet,**
**dass** das Platzhalterobjekt (30) und die Testperson (20) auf der Bewegungsplattform (50) bewegt werden.

5. Verfahren nach einem der Ansprüche 3 oder 4,
**dadurch gekennzeichnet,**
**dass** durch eine Plattenfläche an dem Platzhalterobjekt (30) ein Touchscreen (64) oder ein Tablet-PC (66) mit einer zu testenden Bedienfunktion haptisch simuliert werden.

6. Verfahren nach einem der voranstehenden Ansprüche,
**dadurch gekennzeichnet,**
**dass** ein Touchscreen (64) oder ein Tablet-PC (66) mit einer zu testenden Bedienfunktion an einer Halterung (76) zur Bedienung durch die Testperson (20) angebracht werden.

7. Verfahren nach einem der voranstehenden Ansprüche,
**dadurch gekennzeichnet,**
**dass** damit wenigstens eines der folgenden Geräte getestet wird:
a) eine von einem Mitglied einer Cockpitbesatzung zu bedienende Benutzerschnittstelle zur Steuerung einer Funktion des Luftfahrzeugs,
b) ein neu zu entwickelndes Cockpitbediengerät,
c) ein Tablet-PC (66) oder Touchscreen (64) mit einer zu testenden Bedieneroberfläche (72),
d) eine Benutzerschnittstelle mit Gesten- oder Fingersteuerung und einer zu testenden über die Gesten- oder Fingersteuerung zu bedienenden Funktionseinrichtung,
e) ein mit einer Anzeigeeinrichtung (68) für eine Bedienperson ausgestattetes Gerät,
f) ein von einem Mitglied der Kabinencrew zu bedienendes Gerät, und/oder
g) ein von einem Passagier zu benutzendes und/oder zu bedienendes Gerät.

8. Verfahren nach einem der voranstehenden Ansprüche,
**dadurch gekennzeichnet,**
**dass** ein mit einer Anzeigeeinrichtung (68) ausgestattetes Gerät getestet wird und
**dass** die Anzeigeeinrichtung (68) und/oder auf der Anzeigeeinrichtung (68) anzuzeigende Darstellungen der Testperson (20) virtuell dargestellt werden.

9. Gerätetestvorrichtung (32) zum Testen von in Luftfahrzeugen zu bedienenden Geräten, mit
einem Virtual-Reality-System (10) zur Erzeugung einer Virtual-Reality-Umgebung und einer Testpersonenstation (58), in der sich eine Testperson (20) zum Testen des Geräts aufhalten kann, so dass die Testperson (20) in die Virtual-Reality-Umgebung eingebunden ist,
wobei das Virtual-Reality-System (10) dazu ausgebildet ist, der Testperson (20) das zu testende Gerät (56) virtuell darzustellen, und
wobei das Virtual-Reality-System (10) dazu ausgebildet ist, Interaktionen zwischen der Testperson (20) und dem zu testenden Gerät (56) aufzunehmen.

10. Gerätetestvorrichtung (32) nach Anspruch 9,
**dadurch gekennzeichnet,**
**dass** die Testpersonenstation (58) auf einer Bewegungsplattform (50) ausgebildet ist und dass das Virtual-Reality-System (10) dazu ausgebildet ist, die Bewegungsplattform (50) entsprechend einer mittels der Virtual-Reality-Umgebung zu simulierenden Betriebssituation des Luftfahrzeuges zu bewegen.

11. Gerätetestvorrichtung (32) nach Anspruch 9 oder 10,
**dadurch gekennzeichnet,**
**dass** ein Platzhalterobjekt (30) für das virtuell darzustellende Gerät vorgesehen ist, um der Testperson (20) ein haptisches Feedback beim Testen zu geben.

12. Gerätetestvorrichtung (32) nach Anspruch 10 und nach Anspruch 11,
**dadurch gekennzeichnet,**
**dass** das Platzhalterobjekt (30) auf der Bewegungsplattform (50) angeordnet ist.

13. Gerätetestvorrichtung (32) nach Anspruch 11 oder 12,
**dadurch gekennzeichnet,**
**dass** das Platzhalterobjekt (30) eine Platte zum haptischen Simulieren eines zu testenden Tablet-PCs (66) oder Touchscreens (64) aufweist.

14. Gerätetestvorrichtung (32) nach einem der Ansprüche 9 bis 13,
**dadurch gekennzeichnet,**
**dass** das Virtual-Reality-System (10) dazu ausgebildet ist, eine Anzeigeeinrichtung (68) eines zu testenden Geräts (56) der Testperson (20) virtuell darzustellen.
